# EUROPEAN PATENT APPLICATION

(11) **EP 4 583 621 A1**
(43) Date of publication of application: **09.07.2025**
(21) Application number: 23870174.2
(22) Date of filing: 04.09.2023
(51) Int. Cl.: H04W 74/08, H04W 84/06, H04W 56/00

(54) **COMMUNICATION METHOD AND APPARATUS**

(30) Priority: 28.09.2022 CN 202211192764
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Jiayin, Shenzhen, Guangdong 518129 (CN); TIE, Xiaolei, Shenzhen, Guangdong 518129 (CN); DU, Yinggang, Shenzhen, Guangdong 518129 (CN)
(74) Representative: Thun, Clemens
(86) International application number: PCT/CN2023/116754
(87) International publication number: WO 2024/066934

(57) **Abstract**

Embodiments of this application disclose a communication method and apparatus. The method is applied to a non-terrestrial network, and the method includes: A first communication apparatus receives a first message and a second message from a second communication apparatus, and determines a random access occasion based on the second message, where the first message is used to configure a measurement window of a GNSS signal for the first communication apparatus, the measurement window is used by the first communication apparatus to perform GNSS signal measurement, and an offset of a start location of the random access occasion relative to a start location of the measurement window is within a preset range. According to embodiments of this application, a terminal device can be synchronized with a satellite for a long time.

## Description

This application claims priority to Chinese Patent Application No. 202211192764.6 filed with the China National Intellectual Property Administration on September 28, 2022, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In comparison with terrestrial communication, a non-terrestrial network (non-terrestrial network, NTN) has unique advantages. Satellite communication is used as an example. For example, the satellite communication can provide wider coverage, and satellite base stations are not vulnerable to natural disasters or external forces. Satellite communication can provide communication services for some areas that cannot be covered by a terrestrial communication network, such as oceans and forests. Satellite communication can also enhance communication reliability, for example, ensure airplanes, trains, and users on these transportation vehicles to obtain better communication services. In addition, satellite communication can provide more data transmission resources to improve a network rate. Therefore, supporting both terrestrial communication and satellite communication is an inevitable trend of future communication, and has great benefits in terms of wide coverage, reliability, multi-connection, a high throughput, and the like.

Currently, satellite communication has been introduced in a 3rd generation partnership project (3rd generation partnership project, 3GPP) standard. As a communication scenario of 5th generation (5th generation, 5G) communication or future communication, satellite communication can support various terminal devices of 5G communication, and support internet of things (internet of things, IoT) terminal devices. Satellite communication features high mobility and a large communication delay. Different from terrestrial communication, in satellite communication, a terminal device further implements synchronization based on global navigation satellite system (global navigation satellite system, GNSS) information, an ephemeris, or other auxiliary information, as well as existing uplink synchronization.

For IoT terminal devices, considering that most IoT services feature short packets and periodic transmission, a communication manner of a short-time connection is enhanced in the 3GPP standard. The "short-time connection" in this application may be understood as follows: After initiating access and completing sending uplink data, the terminal device exits a connected mode. In this process, GNSS information obtained by the terminal device before random access is always valid. In other words, in the entire connection process, the GNSS information does not need to be updated, and can meet a synchronization requirement. However, when the terminal device is in the connected mode for a long time, the GNSS information may expire. After the GNSS information expires, the terminal device may fail to be synchronized due to accumulated time and frequency errors. Therefore, how to keep the terminal device to maintain uplink synchronization for a long time in a satellite communication scenario needs to be urgently resolved.

### SUMMARY

Embodiments of this application provide a communication method and apparatus, to keep synchronization between a terminal device and a satellite for a long time in the case that the terminal device and the satellite are in a connected mode for a long time.

In this application, "GNSS information" may represent information related to a geographical location of the terminal device, for example, space coordinates X, Y, and Z, or information such as longitude, latitude, and altitude.

According to a first aspect, this application provides a communication method. The method may be applied to a terminal device, or a processor, a chip, a chip system, a functional module, or the like in the terminal device. The method includes: A first communication apparatus receives a first message and a second message from a second communication apparatus, and determines a random access occasion based on the second message. The first message is used to configure a measurement window of a GNSS signal for the first communication apparatus, and the measurement window is used by the first communication apparatus to perform GNSS signal measurement. The second message is radio resource control (radio resource control, RRC) signaling, a physical downlink control channel (physical downlink control channel, PDCCH), or medium access control (medium access control, MAC) control element (control element, CE) signaling. An offset of a start location of the random access occasion relative to a start location of the measurement window is within a preset range.

The terminal device (namely, the first communication apparatus) needs to calculate a timing advance (timing advance, TA) based on geographical location information (which is GNSS information herein) of the terminal device and geographical location information of a network device (namely, the second communication apparatus) to perform uplink synchronization. Therefore, if the GNSS information expires, it indicates that the GNSS information is inaccurate, and an uplink synchronization requirement may not be met. Therefore, in this application, the second communication apparatus configures the measurement window of the GNSS signal and the random access occasion for the first communication apparatus, so that after the GNSS information expires, the first communication apparatus corrects the TA by initiating non-contention-based random access on the random access occasion, or obtains latest GNSS information by performing GNSS signal measurement in the measurement window, and then calculates the TA based on the latest GNSS information, so that the terminal device is synchronized with a satellite for a long time.

With reference to the first aspect, in a possible implementation, the preset range is an interval [-(T_{RO}+T), +(T_{win}+T)]. T_{RO} represents a length of the random access occasion, T represents a preset threshold, and T_{win} represents a length of the measurement window. In the preset range, "-" represents negative, and "+" represents positive. It may be understood that the random access occasion is in the measurement window when the preset range is 0 to (T_{win}-T_{RO}). Generally, the length of the measurement window is greater than the length of the random access occasion.

With reference to the first aspect, in a possible implementation, the second message includes the random access occasion.

With reference to the first aspect, in a possible implementation, the first communication apparatus sends a preamble (preamble) on the random access occasion, to initiate non-contention-based random access. In this case, the first communication apparatus may not perform GNSS signal measurement in the measurement window.

In this application, when both the measurement window and the random access occasion are configured, the first communication apparatus may preferentially initiate non-contention-based random access on the random access occasion. In this way, after the GNSS information expires, non-contention-based random access is used to replace GNSS signal measurement. This can reduce power consumption caused by GNSS signal measurement, reduce a quantity of GNSS signal measurements, and reduce complexity.

With reference to the first aspect, in a possible implementation, the second message is the PDCCH. If the first communication apparatus receives, before the measurement window arrives, the PDCCH (which is the second message herein) used to trigger non-contention-based random access, the first communication apparatus sends the preamble on the random access occasion indicated by the PDCCH, and may not perform GNSS signal measurement in the measurement window. If the first communication apparatus receives, before the measurement window arrives, no PDCCH (which is the second message herein) used to trigger non-contention-based random access, the first communication apparatus performs GNSS signal measurement in the measurement window.

In this application, after the measurement window of the GNSS signal is configured for the first communication apparatus by using the first message, non-contention-based random access of the first communication apparatus is scheduled by using the PDCCH, and the PDCCH is before the measurement window arrives. In this case, the first communication apparatus initiates non-contention-based random access on the random access occasion indicated by the PDCCH, and does not perform GNSS signal measurement in the measurement window. In this way, GNSS signal measurement may be replaced with non-contention-based random access, so that the first communication apparatus and the second communication apparatus can be synchronized for a long time, power consumption caused by GNSS signal measurement can be reduced, a quantity of GNSS signal measurements can be reduced, and complexity can be reduced.

With reference to the first aspect, in a possible implementation, the second message is the RRC signaling or the MAC CE signaling. In this case, both the RRC signaling and the MAC CE signaling are used to configure the random access occasion. For example, the first message is the RRC signaling, and the first message and the second message may be same RRC signaling, or may be two different pieces of signaling. The random access occasion configured by using the second message corresponds to (or is bound to) the measurement window configured by using the first message, and one measurement window may correspond to one or more random access occasions. An offset of a start location of each random access occasion corresponding to (or bound to) the measurement window relative to the start location of the measurement window is within a preset range.

In this application, the measurement window of the GNSS signal is bound to the random access occasion, and no additional PDCCH is required to configure the random access occasion and trigger non-contention-based random access. This can reduce PDCCH overheads and reduce PDCCH detection before the random access occasion.

With reference to the first aspect, in a possible implementation, after the first communication apparatus sends a preamble on the random access occasion, the method further includes: The first communication apparatus receives a random access response message from the second communication apparatus, where the random access response message includes indication information, and the indication information indicates whether a value of a TA is a positive value or a negative value.

With reference to the first aspect, in a possible implementation, after the first communication apparatus sends a preamble on the random access occasion, the method further includes: The first communication apparatus receives a third message from the second communication apparatus, where the third message is used to notify the first communication apparatus to perform GNSS signal measurement; and the first communication apparatus performs GNSS signal measurement in (remaining time of) the measurement window.

In this application, when a TA error is excessively large, the first communication apparatus is allowed to continue to update the GNSS information by performing GNSS signal measurement, to meet a synchronization requirement.

With reference to the first aspect, in a possible implementation, after the first communication apparatus sends a preamble on the random access occasion, the method further includes: The first communication apparatus receives a third message from the second communication apparatus, where the third message is used to notify the first communication apparatus to perform GNSS signal measurement; and the first communication apparatus re-determines a start location and/or an end location of the measurement window, and performs GNSS signal measurement in a re-determined measurement window. For example, considering insufficiency of time for performing GNSS signal measurement after the first communication apparatus receives the third message, the start location of the measurement window may be postponed to an end location of the random access occasion (the length of the measurement window remains unchanged). Alternatively, the measurement window is postponed to start after a period of time after the random access occasion ends (the length of the measurement window remains unchanged). Alternatively, the end location of the measurement window is postponed for a period of time (the length of the measurement window increases).

After receiving a notification of continuing to update the GNSS information through GNSS signal measurement, the first communication apparatus in this application re-determines the location of the measurement window, so that measurement time of the GNSS signal is sufficient, and GNSS signal measurement can be implemented in the re-determined measurement window.

With reference to the first aspect, in a possible implementation, before the first communication apparatus receives a first message from the second communication apparatus, the method further includes: The first communication apparatus sends a fourth message to the second communication apparatus, where the fourth message indicates measurement duration required by the first communication apparatus to perform GNSS signal measurement and valid duration of the GNSS information. The measurement duration is used to determine a length of the measurement window, and the valid duration of the GNSS information is used to determine the start location of the measurement window.

The first communication apparatus in this application reports, to the second communication apparatus, the measurement duration required by the first communication apparatus to perform GNSS signal measurement and the valid duration of the GNSS information, so that the measurement window configured by the second communication apparatus is more appropriate.

With reference to the first aspect, in a possible implementation, the first message includes one or more of the following: the start location of the measurement window, the end location of the measurement window, the length of the measurement window, or a measurement periodicity.

According to a second aspect, this application provides a communication method. The method may be applied to a network device (for example, a satellite or a terrestrial base station), or a processor, a chip, a chip system, a functional module, or the like in the network device. The method includes: A second communication apparatus sends a first message and a second message to a first communication apparatus, where the second message is used to determine a random access occasion; and the second communication apparatus performs preamble detection on the random access occasion determined based on the second message. The first message is used to configure a measurement window of a GNSS signal for the first communication apparatus, and the measurement window is used by the first communication apparatus to perform GNSS signal measurement. The second message is RRC signaling, a PDCCH, or MAC CE signaling. An offset of a start location of the random access occasion relative to a start location of the measurement window is within a preset range.

With reference to the second aspect, in a possible implementation, the preset range is an interval [-(T_{RO}+T), +(T_{win}+T)]. T_{RO} represents a length of the random access occasion, T represents a preset threshold, and T_{win} represents a length of the measurement window. In the preset range, "-" represents negative, and "+" represents positive. It may be understood that the random access occasion is in the measurement window when the preset range is 0 to (T_{win}-T_{RO}). Generally, a length of the measurement window is greater than a length of the random access occasion.

With reference to the second aspect, in a possible implementation, the second message includes the random access occasion.

Optionally, when the second message is the PDCCH, the PDCCH indicates the random access occasion, and is used to trigger non-contention-based random access.

Optionally, the second message is the RRC signaling or the MAC CE signaling, and the RRC signaling or the MAC CE signaling is used to configure the random access occasion. For example, the first message is RRC signaling, and the first message and the second message may be same RRC signaling, or certainly may be two different pieces of signaling. The random access occasion configured by using the second message corresponds to (or is bound to) the measurement window configured by using the first message, and one measurement window may correspond to one or more random access occasions. An offset of a start location of each random access occasion corresponding to (or bound to) the measurement window relative to a start location of the measurement window is within a preset range.

With reference to the second aspect, in a possible implementation, if the second communication apparatus detects a preamble on the random access occasion, the second communication apparatus sends a random access response message to the first communication apparatus, where the random access response message includes indication information, and the indication information indicates whether a value of a TA is a positive value or a negative value.

Optionally, after the second communication apparatus detects the preamble on the random access occasion, if the second communication apparatus finds that a TA error detected by using the preamble does not exceed a closed-loop correction range, or the second communication apparatus considers that the TA error of the first communication apparatus can be compensated for through non-contention-based random access, the second communication apparatus sends the random access response message to the first communication apparatus.

With reference to the second aspect, in a possible implementation, if the second communication apparatus detects a preamble on the random access occasion, and the second communications apparatus finds that the TA error detected by using the preamble is large and has exceeded a closed-loop correction range, or when the second communication apparatus considers that it is difficult to compensate for the TA error of the first communication apparatus by using non-contention-based random access, the second communication apparatus sends a third message to the first communication apparatus, where the third message indicates the first communications apparatus to perform GNSS signal measurement.

In this application, when the TA error is excessively large, the first communication apparatus is allowed to continue to update GNSS information by performing GNSS signal measurement, to meet a synchronization requirement.

With reference to the second aspect, in a possible implementation, if the second communication apparatus detects no preamble on the random access occasion and receives no fifth message from the first communication apparatus on a feedback resource corresponding to the measurement window, the second communication apparatus (re) sends a PDCCH used to trigger non-contention-based random access after the measurement window ends, where the PDCCH may indicate a new random access occasion, so that the first communication apparatus initiates new non-contention-based random access on the new random access occasion. In this way, a possibility of uplink out-of-synchronization is reduced.

With reference to the second aspect, in a possible implementation, before a second communication apparatus sends a first message to a first communication apparatus, the method further includes: The second communication apparatus receives a fourth message from the first communication apparatus, where the fourth message indicates measurement duration required by the first communication apparatus to perform GNSS signal measurement and valid duration of GNSS information; and the second communication apparatus may determine a length of the measurement window based on the measurement duration, and determine the start location of the measurement window based on the valid duration of the GNSS information.

With reference to the second aspect, in a possible implementation, the first message includes one or more of the following: the start location of the measurement window, the end location of the measurement window, the length of the measurement window, or a measurement periodicity.

According to a third aspect, an embodiment of this application provides a first communication apparatus, configured to perform the method in any one of the first aspect or the possible implementations of the first aspect. The first communication apparatus includes units that perform the method according to any one of the first aspect or the possible implementations of the first aspect.

For example, the first communication apparatus may be a terminal device or a chip, and the chip may be used in the terminal device.

According to a fourth aspect, an embodiment of this application provides a second communication apparatus, configured to perform the method according to any one of the second aspect or the possible implementations of the second aspect. The second communication apparatus includes units that perform the method according to any one of the second aspect or the possible implementations of the second aspect.

For example, the second communication apparatus may be a network device or a chip, and the chip may be used in the network device.

In the third aspect or the fourth aspect, the communication apparatus may include a transceiver unit and a processing unit. For specific descriptions of the transceiver unit and the processing unit, refer to apparatus embodiments described below. For beneficial effects of the third aspect and the fourth aspect, refer to related descriptions of the first aspect and the second aspect. Details are not described herein again.

According to a fifth aspect, this application provides a first communication apparatus. The first communication apparatus includes a processor, configured to perform the method according to any one of the first aspect or the possible implementations of the first aspect. Alternatively, the processor is configured to execute a program stored in a memory. When the program is executed, the method shown in any one of the first aspect or the possible implementations of the first aspect is performed.

In a possible implementation, the memory is located outside the first communication apparatus.

In a possible implementation, the memory is located inside the first communication apparatus.

In this application, the processor and the memory may alternatively be integrated into one component. In other words, the processor and the memory may alternatively be integrated together.

In a possible implementation, the first communication apparatus further includes a transceiver. The transceiver is configured to receive a signal or send a signal. For example, the transceiver may be further configured to receive at least one of a first message or a second message. For example, the transceiver may be further configured to send a preamble and the like.

In this application, the first communication apparatus may be a terminal device, a chip in a terminal device, or the like.

According to a sixth aspect, an embodiment of this application provides a second communication apparatus. The second communication apparatus includes a processor, configured to perform the method according to any one of the second aspect or the possible implementations of the second aspect. Alternatively, the processor is configured to execute a program stored in a memory. When the program is executed, the method shown in any one of the second aspect or the possible implementations of the second aspect is performed.

In a possible implementation, the memory is located outside the second communication apparatus.

In a possible implementation, the memory is located inside the second communication apparatus.

In this application, the processor and the memory may alternatively be integrated into one component. In other words, the processor and the memory may alternatively be integrated together.

In a possible implementation, the second communication apparatus further includes a transceiver. The transceiver is configured to receive a signal or send a signal. For example, the transceiver may be configured to send at least one of a first message or a second message. For example, the transceiver may be further configured to receive a fourth message, a preamble, or the like.

In this application, the second communication apparatus may be a network device, a chip in a network device, or the like.

According to a seventh aspect, this application provides a first communication apparatus. The first communication apparatus includes a logic circuit and an interface, and the logic circuit is coupled to the interface. The interface is configured to input a first message and a second message, where the first message is used to configure a measurement window of a GNSS signal for the first communication apparatus, the measurement window is used by the first communication apparatus to perform GNSS signal measurement, and the second message is RRC signaling or a PDCCH; and the logic circuit is configured to determine a random access occasion based on the second message. An offset of a start location of the random access occasion relative to a start location of the measurement window is within a preset range.

According to an eighth aspect, this application provides a second communication apparatus. The second communication apparatus includes a logic circuit and an interface, and the logic circuit is coupled to the interface. The interface is configured to output a first message and a second message, where the first message is used to configure a measurement window of a GNSS signal for a first communication apparatus, the measurement window is used by the first communication apparatus to perform GNSS signal measurement, the second message is RRC signaling or a PDCCH, and the second message is used to determine a random access occasion; and the logic circuit is configured to perform preamble detection on the random access occasion. An offset of a start location of the random access occasion relative to a start location of the measurement window is within a preset range.

According to a ninth aspect, this application provides a computer-readable storage medium. The computer-readable storage medium is configured to store a computer program. When the computer program is run on a computer, the method according to any one of the first aspect or the possible implementations of the first aspect is performed.

According to a tenth aspect, this application provides a computer-readable storage medium. The computer-readable storage medium is configured to store a computer program. When the computer program is run on a computer, the method according to any one of the second aspect or the possible implementations of the second aspect is performed.

According to an eleventh aspect, an embodiment of this application provides a computer program product. The computer program product includes a computer program or computer code, and when the computer program or computer code is run on a computer, the method according to any one of the first aspect or the possible implementations of the first aspect is performed.

According to a twelfth aspect, an embodiment of this application provides a computer program product. The computer program product includes a computer program or computer code, and when the computer program or computer code is run on a computer, the method according to any one of the second aspect or the possible implementations of the second aspect is performed.

According to a thirteenth aspect, this application provides a computer program. When the computer program is run on a computer, the method according to any one of the first aspect or the possible implementations of the first aspect is performed.

According to a fourteenth aspect, this application provides a computer program. When the computer program is run on a computer, the method according to any one of the second aspect or the possible implementations of the second aspect is performed.

According to a fifteenth aspect, an embodiment of this application provides a wireless communication system. The wireless communication system includes a first communication apparatus and a second communication apparatus, the first communication apparatus is configured to perform the method according to any one of the first aspect or the possible implementations of the first aspect, and the second communication apparatus is configured to perform the method according to any one of the second aspect or the possible implementations of the second aspect.

For technical effects achieved in the foregoing aspects, refer to each other or technical effects in the following method embodiments. Details are not described herein.

### BRIEF DESCRIPTION OF DRAWINGS

FIG. 1 is a diagram of an architecture of a communication system according to an embodiment of this application;
FIG. 2 is a diagram of another architecture of a communication system according to an embodiment of this application;
FIG. 3 is a diagram of still another architecture of a communication system according to an embodiment of this application;
FIG. 4 is a schematic flowchart of a communication method according to an embodiment of this application;
FIG. 5 is a diagram of a location relationship between a random access occasion and a measurement window according to an embodiment of this application;
FIG. 6 is a diagram of a time sequence of a communication method according to an embodiment of this application;
FIG. 7 is another schematic flowchart of a communication method according to an embodiment of this application;
FIG. 8a is a diagram of another time sequence of a communication method according to an embodiment of this application;
FIG. 8b is a diagram of still another time sequence of a communication method according to an embodiment of this application;
FIG. 9 is a diagram of a structure of a communication apparatus according to an embodiment of this application;
FIG. 10 is a diagram of a structure of a communication apparatus 1000 according to an embodiment of this application; and
FIG. 11 is a diagram of another structure of a communication apparatus according to an embodiment of this application.

### DESCRIPTION OF EMBODIMENTS

The following clearly describes the technical solutions in embodiments of this application with reference to the accompanying drawings in embodiments of this application.

In this application, the terms "first", "second", and so on are intended to distinguish between different objects but do not indicate a particular order of the objects. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or features described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item) "or a similar expression thereof means one or more, "a plurality of" means two or more, and "at least two (item) "means two, three, or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following" or a similar expression thereof means any combination of these items. For example, at least one of a, b, or c may indicate: a, b, c, "a and b", "a and c", "b and c", or "a and b and c".

The technical solutions provided in this application may be applied to various communication systems, for example, may be applied to a 5G communication system, for example, a new radio access technology (new radio access technology, NR) system, or may be applied to various communication systems evolved after 5G, for example, a 6th generation (6th generation, 6G) communication system. This application may be further applied to other communication systems and the like that support satellite communication.

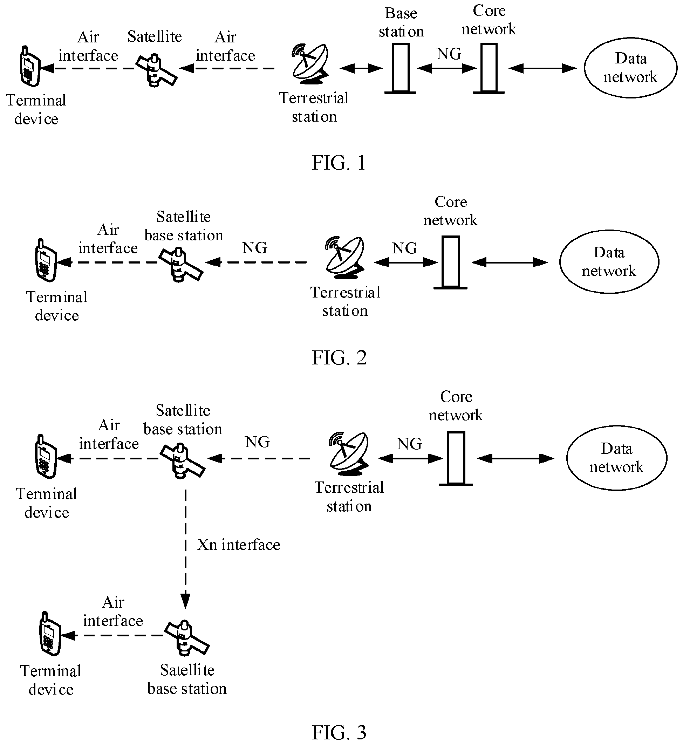

FIG. 1, FIG. 2, and FIG. 3 show an example of an architecture of a possible communication system that supports satellite communication. The communication method provided in embodiments of this application may be applied to an architecture of any communication system in FIG. 1, FIG. 2, or FIG. 3. The architecture of the communication system may also be referred to as an architecture of a satellite-to-ground convergence network.

In the communication system shown in FIG. 1, a base station may be deployed on the ground, a satellite is connected to a terrestrial station (which may also be referred to as a gateway or a gateway station) (gateway) through an air interface. The terrestrial station may be connected to a terrestrial base station in a wireless or wired manner. The terrestrial base station may be connected to a core network in a wired or wireless manner. A terminal device on the ground may access a network through an air interface (the air interface may be various types of air interfaces, for example, a 5G air interface). The satellite serves as a transmission node to forward information of the terminal device. There may also be a radio link between satellites. In the communication system shown in FIG. 1, the satellite may have a transparent transmission and forwarding function (that is, a corresponding base station is deployed on the ground). Transparent transmission and forwarding may be implemented between the satellites.

In the communication system shown in FIG. 2, a base station may be deployed on a satellite. For example, the base station or some base station functions are deployed on the satellite. The satellite may be connected to a terrestrial station through an air interface, and the terrestrial station may be connected to a core network in a wireless or wired manner. A terminal device on the ground may communicate with a satellite base station through an air interface (the air interface may be various types of air interfaces, for example, a 5G air interface), to access a network. The satellite is used as a base station and is connected to the terrestrial station through an NG interface. The terrestrial station is connected to a core network through an NG interface. The NG interface may be in a wireless form or a wired form.

In comparison with the communication system shown in FIG. 2, a communication scenario between satellite base stations is added to the communication system shown in FIG. 3. Specifically, satellite base stations may communicate with each other through an Xn interface, and signaling exchange and user data transmission between base stations may be completed between the satellites.

It may be understood that a quantity of network elements in the communication system shown in FIG. 1, FIG. 2, and FIG. 3 is merely an example. In actual use, an architecture with a plurality of satellites and/or a plurality of terrestrial stations may be used as required. In other words, each satellite may provide a service for one or more terminal devices, each satellite may correspond to one or more terrestrial stations, each terrestrial station may correspond to one or more satellites, and the like. This is not limited in this application.

For example, network elements in FIG. 1 to FIG. 3 and interfaces of the network elements are described as follows.

In FIG. 1 to FIG. 3, the terminal device may be various types of terminals that support NR, for example, a mobile phone, a tablet computer, a vehicle-mounted terminal device, and a wearable terminal device. The terminal device may access a satellite network through an air interface and initiate services such as call and internet access. The terminal device may be referred to as a terminal, user equipment (user equipment, UE), an access terminal, a subscriber unit (subscriber unit), a subscriber station, a mobile station (mobile station), a customer-premises equipment (customer-premises equipment, CPE), a remote station, a remote terminal, a mobile device, a user terminal, a wireless communication device, a user agent, or a user apparatus. The terminal device in this application may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a handheld device having wireless a communication capability, a computing device, or another processing device connected to a wireless modem, a vehicle-mounted device, a communication device carried on a high-altitude aircraft, a wearable device, a drone, a robot, or a point of sale (point of sale, POS) machine. The terminal device in this application may alternatively be a terminal in the internet of things (internet of things, IoT), a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in any form in a future communication network, or the like. This is not limited in this application.

The base station is an example of a network device, and may be configured to: provide a radio access service, schedule a radio resource for an accessed terminal device, and provide a reliable wireless transmission protocol, a data encryption protocol, and the like. The network device in this application may be a device that is deployed in a radio access network and that provides a wireless communication function for the terminal device. For example, the network device may be a radio access network (radio access network, RAN) node that connects the terminal device to the wireless network, and may also be referred to as an access network device. The network device in this application may be a next generation NodeB (next generation NodeB, gNB) in a 5G communication system, or may be a base station in a future communication system (for example, a 6G communication system). Specifically, the network device may include but is not limited to an evolved NodeB (evolved NodeB, eNB), a home base station (for example, a home evolved NodeB, or a home NodeB, HNB), a baseband unit (baseband unit, BBU), an active antenna unit (active antenna unit, AAU), a wireless relay node, a wireless backhaul node, a transmission point (transmission point, TP) or a transmission reception point (transmission reception point, TRP), a device that functions as a base station in device-to-device (device-to-device, D2D), vehicle-to-everything (vehicle-to-everything, V2X), or machine-to-machine (machine-to-machine, M2M) communication, or the like. The network device may further include a central unit (centralized unit, CU) and a distributed unit (distributed unit, DU) in a cloud access network (cloud radio access network, C-RAN) system, and a network device (which may be deployed on a high-altitude platform or a satellite) in an NTN communication system. Alternatively, the network device may be one antenna panel or a group of antenna panels (including a plurality of antenna panels) of a base station in a 5G mobile communication system. Alternatively, the network device may be a network node that constitutes a gNB or a transmission point. This is not limited in embodiments of this application.

The terrestrial station may be responsible for forwarding signaling and service data between the satellite and the base station or between the satellite and the core network.

The core network may be used for user access control, mobility management, session management, user security authentication, charging, or the like. The core network may include a plurality of functional units, for example, functional entities including a control plane and a data plane. For example, the core network shown in FIG. 1 to FIG. 3 may include an access and mobility management function (access and mobility management function, AMF), a session management function (session management function, SMF), a user plane function (user plane function, UPF), and the like. For example, the AMF may be configured to be responsible for user access management, security authentication, mobility management, and the like. The UPF may be configured to be responsible for managing user plane data transmission, traffic statistics collection, and the like.

The air interface shown in FIG. 1 to FIG. 3 may be understood as a radio link between the terminal and the base station, or a radio link between the satellite and the terrestrial station.

The Xn interface may be understood as an interface between the base stations, and is mainly used for signaling exchange such as a handover.

The NG interface may represent an interface between the base station and the core network, an interface between the terrestrial station and the core network, or an interface between the satellite base station and the terrestrial station (in this case, the interface is a radio link), and is used for exchanging signaling such as non-access stratum (non-access Stratum, NAS) signaling of the core network and service data of a user.

It may be understood that in systems using different radio access technologies, names of devices having functions of the base station may be different, and are not shown one by one in this application.

Optionally, the satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (none-geostationary earth orbit, NGEO), a high altitude platform station (High Altitude Platform Station, HAPS), or the like. A specific type of the satellite is not limited in this application.

The system architecture and the service scenario described in embodiments of this application are intended to describe the technical solutions in embodiments of this application more clearly, and do not constitute any limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Currently, to adapt to features of high mobility and a large communication delay of satellite communication, technologies such as timing, synchronization, and hybrid automatic repeat request are separately enhanced in the standard. This application mainly focuses on a synchronization problem in a satellite communication scenario. Considering that satellite communication has features of high mobility and a large communication delay, a terminal device implements synchronization based on GNSS information, an ephemeris, or other auxiliary information as well as existing uplink synchronization. Currently, the 3GPP standard enhances only a communication manner in which the terminal device is connected to the satellite for a short time, but does not enhance a communication manner in which the terminal device is connected to the satellite for a long time. In a communication scenario in which the terminal device is connected to the satellite for a short time, the terminal device obtains the GNSS information before random access, and the GNSS information is always valid before the terminal device exits a connected mode. This is because a process in which the terminal device initiates access and exits the connected mode after sending uplink data takes short time. Therefore, even if the terminal device moves in this process, a deviation of the GNSS information caused by the movement can still meet a synchronization requirement. However, when the terminal device and the satellite are in the connected mode for a long time, because the GNSS information has valid duration, that is, a period of time after which the current GNSS information expires, in a communication scenario in which the terminal device and the satellite are connected for a long time, the GNSS information may expire. After the GNSS information expires, synchronization of the terminal device may fail due to accumulated time and frequency errors. Consequently, a radio link failure occurs, that is, the terminal device cannot continue to maintain a connection to the satellite.

Therefore, when the terminal device and the satellite are in the connected mode for a long time, GNSS information may need to be obtained again. However, obtaining GNSS information has high complexity, and high power consumption. In addition, for existing IoT terminals, communication and obtaining of the GNSS information cannot be performed at the same time. Therefore, if the terminal device in the connected mode re-obtains the GNSS information, normal communication is affected, for example, a service of the terminal device may be interrupted.

Based on this, embodiments of this application provide a communication method and apparatus, to enhance a communication manner in which the terminal device is connected to the satellite for a long time. Therefore, the terminal device can be synchronized with the satellite for a long time, and power consumption (or overheads) caused by GNSS signal measurement performed by the terminal device can be reduced. In addition, a quantity of GNSS signal measurements is reduced, and complexity is reduced.

In this application, "performing GNSS signal measurement", "obtaining GNSS information", "starting a GNSS module for GNSS positioning", and the like may all be understood as a process of performing positioning based on a signal of a navigation satellite to obtain geographical location information of the terminal device. In this application, "GNSS information" may represent information related to a geographical location of the terminal device, for example, space coordinates X, Y, and Z, or information such as longitude, latitude, and altitude.

It should be noted that a random access occasion in this application may be an RO, for example, a PRACH occasion or a PRACH transmission occasion, PRACH occasion or PRACH transmission occasion, where PRACH is the acronym of physical random access channel, physical random access channel.

In embodiments of this application, the communication method provided in this application is described in detail by using a first communication apparatus and a second communication apparatus as an example. The first communication apparatus may be a terminal device, or a processor, a chip, a chip system, a functional module, or the like in the terminal device. The second communication apparatus may be a network device (for example, a satellite or a terrestrial base station), or a processor, a chip, a chip system, a functional module, or the like in the network device. For descriptions of the terminal device, the network device, and the like, refer to FIG. 1 to FIG. 3. Details are not described herein again. Specific forms of the first communication apparatus and the second communication apparatus are not limited in embodiments of this application.

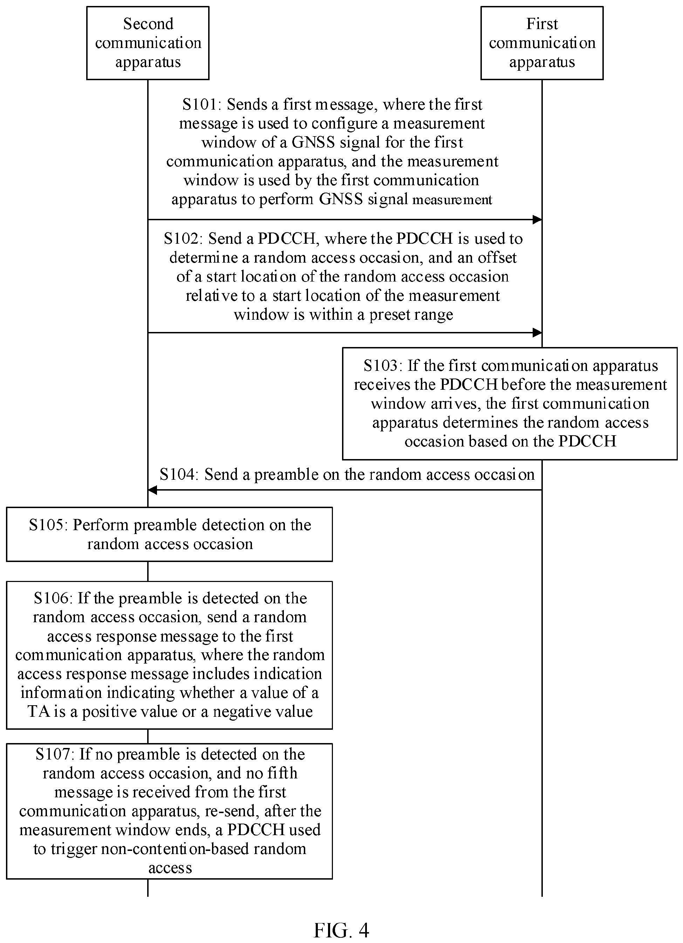

FIG. 4 is a schematic flowchart of a communication method according to an embodiment of this application. As shown in FIG. 4, the communication method includes the following steps.

S101: A second communication apparatus sends a first message to a first communication apparatus, where the first message is used to configure a measurement window of a GNSS signal for the first communication apparatus, and the measurement window is used by the first communication apparatus to perform GNSS signal measurement.

Correspondingly, the first communication apparatus receives the first message.

Optionally, before step S101, the first communication apparatus reports a capability of the first communication apparatus to the second communication apparatus. The capability of the first communication apparatus may be classified into two types: a limited capability or an unlimited capability. When the capability of the first communication apparatus is limited, the second communication apparatus configures the measurement window of the GNSS signal for the first communication apparatus, that is, performs step S101. When the capability of the first communication apparatus is not limited, the second communication apparatus does not need to configure the measurement window of the GNSS signal.

"Limited capability" in this application may mean that communication signal (for example, physical downlink control channel (physical downlink control channel, PDCCH)) monitoring cannot be performed in a process of performing GNSS signal measurement, and GNSS signal measurement cannot be performed in a random access process. In other words, "limited capability" may also be understood as that communication (for example, receiving and sending of communication data, and PDCCH monitoring) and GNSS signal measurement cannot be supported at the same time. "Unlimited capability" in this application may mean that communication signal (for example, PDCCH) monitoring can be performed in a process of performing GNSS signal measurement, and GNSS signal measurement can also be performed in a random access process. In other words, "unlimited capability" may also be understood as that both communication and GNSS signal measurement can be supported.

It may be understood that the capability of the first communication apparatus is limited in this embodiment of this application, and details are not described below again.

In a possible implementation, the first message may be radio resource control (radio resource control, RRC) signaling. The second communication apparatus may configure the measurement window of the GNSS signal for the first communication apparatus by using the RRC signaling. Herein, the second communication apparatus may configure one or more measurement windows for the first communication apparatus. This is not limited in this embodiment of this application. The measurement window configured by the second communication apparatus for the first communication apparatus may be used by the first communication apparatus to perform GNSS signal measurement.

In another possible implementation, the first message may be medium access control (medium access control, MAC) control element (control element, CE) signaling. The second communication apparatus configures the measurement window of the GNSS signal for the first communication apparatus by using the MAC CE signaling. It may be understood that the terminal device sends a feedback after the terminal device receives the MAC CE signaling. If an ACK (acknowledge, acknowledge) message is fed back, it indicates that the terminal device correctly receives the MAC CE signaling, and the MAC CE signaling starts to take effect after 3 ms (milliseconds) after the feedback. Therefore, a start location of the measurement window configured by using the MAC CE signaling may be an effective location of the MAC CE signaling. Certainly, if the terminal device feeds back a NACK (non-acknowledge) message, it indicates that the terminal device does not correctly receive the MAC CE signaling.

In this case, after the second communication apparatus sends the MAC CE signaling to the first communication apparatus (the MAC CE signaling is used to configure the measurement window of the GNSS signal for the first communication apparatus), if the first communication apparatus does not correctly receive the MAC CE signaling, the first communication apparatus may send a first feedback to the second communication apparatus. If the first communication apparatus correctly receives the MAC CE signaling and the first communication apparatus does not want to perform GNSS signal measurement in the measurement window configured by using the MAC CE, the first communication apparatus may send a second feedback to the second communication apparatus. In a possible scenario herein, it is assumed that valid duration of GNSS information is 10 seconds (s), and the second communication apparatus sends the MAC CE signaling to configure the measurement window of the GNSS signal when remaining valid duration of the GNSS information remains 5s. In this case, the first communication apparatus determines to skip GNSS signal measurement once. If the first communication apparatus correctly receives the MAC CE signaling and the first communication apparatus prepares to perform GNSS signal measurement in the measurement window configured by using the MAC CE, the first communication apparatus may send a third feedback to the second communication apparatus.

The first feedback may indicate that the first communication apparatus does not correctly receive the MAC CE signaling. The second feedback may indicate that the first communication apparatus correctly receives the MAC CE signaling, but the first communication apparatus does not want to perform GNSS signal measurement in the measurement window configured by using the MAC CE. The third feedback may indicate that the first communication apparatus correctly receives the MAC CE signaling, and the first communication apparatus prepares to perform GNSS signal measurement in the measurement window configured by using the MAC CE. For example, the first feedback, the second feedback, and the third feedback may be represented by two bits. For example, 00 represents the first feedback, 01 represents the second feedback, and 10 represents the third feedback.

Optionally, if the first communication apparatus correctly receives the MAC CE signaling, and a random access occasion is configured, the first communication apparatus chooses to initiate non-contention-based random access without performing GNSS signal measurement, and the first communication apparatus may send a fourth feedback to the second communication apparatus. In other words, the second communication apparatus configures both the measurement window of the GNSS signal and the random access occasion for the first communication apparatus, and a priority of non-contention-based random access corresponding to the random access occasion is higher than that of GNSS signal measurement. In this case, the first communication apparatus may preferentially choose to perform non-contention-based random access. The fourth feedback may indicate that the first communication apparatus correctly receives the MAC CE signaling, and the first communication apparatus performs GNSS signal measurement in the measurement window configured by using the MAC CE, but the first communication apparatus receives the configured random access occasion, and chooses to perform non-contention-based random access without performing GNSS signal measurement. For example, the fourth feedback may be represented by bits "11".

It may be further understood that, in an existing standard, the ACK/NACK message may be multiplexed with a sounding request (sounding request, SR), that is, the SR is implicitly carried in the ACK/NACK message by using a cover code (cover code). This operation is similar to scrambling. There are two types of cover code sequences that indicate different information. The network device determines whether the SR is 0 or 1 by detecting the cover code.

In this case, after the second communication apparatus sends the MAC CE signaling to the first communication apparatus (the MAC CE signaling is used to configure the measurement window of the GNSS signal for the first communication apparatus), if the first communication apparatus correctly receives the MAC CE signaling, the first communication apparatus may feed back the ACK message to the second communication apparatus, where the ACK message includes one of a first cover code, a second cover code, or a third cover code. The first cover code may indicate that the first communication apparatus does not want to perform GNSS signal measurement in the measurement window configured by using the MAC CE. The second cover code may indicate that the first communication apparatus prepares to perform GNSS signal measurement in the measurement window configured by using the MAC CE. The second cover code may indicate that the first communication apparatus receives the configured random access occasion, and chooses to perform non-contention-based random access without performing GNSS signal measurement. Certainly, if the first communication apparatus does not correctly receive the MAC CE signaling, the first communication apparatus may feed back the NACK message to the second communication apparatus.

Optionally, if the first communication apparatus does not want to perform GNSS signal measurement in the measurement window configured by using the MAC CE, after receiving a corresponding feedback, the second communication apparatus considers that a previously configured measurement window is released, and continues to normally schedule data. The first communication apparatus also monitors the communication signal at proper time after the feedback. For example, if the first communication apparatus sends the second feedback or the ACK message carrying the first cover code to the second communication apparatus, the first communication apparatus starts to monitor data scheduling of the second communication apparatus after a period of time after sending the second feedback or the ACK message carrying the first cover code.

Optionally, when configuring the measurement window of the GNSS signal by using the MAC CE signaling, the second communication apparatus may configure a feedback resource corresponding to the measurement window, for example, a feedback time-frequency resource, a modulation and coding scheme (modulation and coding scheme, MCS), and a quantity of repetitions. The feedback resource of the measurement window is used by the first communication apparatus to feed back information indicating that GNSS signal measurement is completed. Because of a transmission delay between the first communication apparatus and the second communication apparatus, a time domain resource needs to have a scheduling delay parameter like Koffset that indicates a relative logical relationship between an uplink resource and an MAC CE time domain resource. The second communication apparatus may perform timing advance on a corresponding time domain resource to send information indicating that GNSS signal measurement is completed. Koffset may be at a UE level or a cell level. This is not limited in this embodiment of this application. For example, in consideration of a case in which long time has passed before the MAC CE signaling is delivered when the first communication apparatus performs a feedback, Koffset at the UE level may expire, and Koffset at the cell level may be used. It may be understood that, if the first communication apparatus does not complete GNSS signal measurement due to a problem like signal quality, the second communication apparatus may schedule non-contention-based random access or continue to configure the measurement window of the GNSS signal.

In still another possible implementation, the first message may be downlink control information (downlink control information, DCI). The second communication apparatus configures the measurement window of the GNSS signal for the first communication apparatus by using the DCI. It may be understood that the DCI is carried in the PDCCH, and does not need to be fed back. However, when configuring the measurement window of the GNSS signal by using the DCI, the second communication apparatus further configures a feedback resource corresponding to the measurement window, for example, a feedback time-frequency resource, an MCS, and a quantity of repetitions. In this case, the time domain resource also needs to have a scheduling delay parameter like Koffset. Details are not described herein again.

Optionally, the measurement window may be determined by using at least two of the following: the start location of the measurement window, an end location of the measurement window, and a length of the measurement window. Because the length of the measurement window is usually related to a capability of the terminal device (the first communication apparatus herein), the length of the measurement window may be configured once, and only the start location or the end location of the measurement window may be configured during subsequent configuration of the measurement window. Certainly, the length of the measurement window may alternatively be updated after being configured. Updating of the length of the measurement window may be indicated by other signaling, or an updated length of the measurement window may be carried in the first message. This is not limited in this embodiment of this application. Therefore, the first message may include one or more of the following: the start location of the measurement window, the end location of the measurement window, or the length of the measurement window. For example, both the start location and the end location of the measurement window may be represented by a system frame and a subframe. Specific representation forms of the start location and the end location of the measurement window are not limited in this embodiment of this application. For example, the length of the measurement window may be represented by a quantity of system frames or subframes, or may be represented by a time interval, for example, x (x>0) milliseconds (ms), or may be represented by a quantity of slots or symbols. A specific representation form of the length of the measurement window is not limited in this embodiment of this application.

Optionally, the measurement window may be periodic or aperiodic. If the measurement window is periodic, a periodicity of the measurement window may be predefined, for example, specified in a standard protocol, or may be determined through negotiation between the first communication apparatus and the second communication apparatus. Alternatively, the periodicity of the measurement window may be configured by the second communication apparatus by using the first message (in other words, the first message may further include the periodicity of the measurement window, which is referred to as a measurement periodicity for short), or the like. This is not limited in this embodiment of this application. If the measurement window is aperiodic, each time the second communication apparatus needs to configure the measurement window, the second communication apparatus may indicate, to the first communication apparatus, a specific system frame and a specific subframe as a start location or an end location of a next measurement window. Optionally, information such as a length of the next measurement window may be further indicated.

Optionally, the length of the measurement window may be determined based on measurement duration required by the first communication apparatus to perform GNSS signal measurement. For example, the length of the measurement window may be greater than or equal to the measurement duration. The start location of the measurement window may be determined based on valid duration of the GNSS information. For example, the start location of the measurement window may be before the valid duration of the GNSS information ends, or the start location of the measurement window is an end location of the valid duration of the GNSS information. It may be understood that a distance between two adjacent measurement windows may be less than or equal to the valid duration of the GNSS information if the measurement window is periodic. Herein, the distance between the two adjacent measurement windows may be a distance between an end location of an i^{th} measurement window and a start location of an (i+1)^{th} measurement window, where i is an integer greater than or equal to 1.

For example, before step S101, the first communication apparatus may send a fourth message to the second communication apparatus, where the fourth message may indicate the measurement duration required by the first communication apparatus to perform GNSS signal measurement and the valid duration of the GNSS information. The second communication apparatus determines the length of the measurement window based on the measurement duration, and may determine the start location of the measurement window based on the valid duration of the GNSS information.

In some scenarios, before step S101, the first communication apparatus may report one or more pieces of measurement duration to the second communication apparatus, where the one or more pieces of measurement duration respectively correspond to different GNSS startup modes. Generally, the GNSS startup mode includes hot startup, cold startup, and warm startup. The first communication apparatus may report measurement duration respectively corresponding to the three GNSS startup modes: hot startup, cold startup, and warm startup. It may be understood that measurement duration corresponding to the three GNSS startup modes (namely, hot startup, cold startup, and warm startup) is different. In this case, the second communication apparatus may configure the measurement window of the GNSS signal in an aperiodic manner. When the second communication apparatus configures the next measurement window for the first communication apparatus by using RRC signaling, if the second communication apparatus finds that a time interval between current time and time of previous GNSS signal measurement is long, for example, exceeds 2 hours, the second communication apparatus may determine the length of the next measurement window based on the measurement duration corresponding to warm startup. This is because measurement duration corresponding to the warm startup is long, and the length of the corresponding next measurement window is also long, so that the first communication apparatus can complete GNSS signal measurement in the configured measurement window. If the second communication apparatus finds that the time interval between the current time and the time of previous GNSS signal measurement is short, for example, less than 2 hours, the second communication apparatus may determine the length of the next measurement window based on the measurement duration corresponding to hot startup. This is because hot startup time is short, and measurement duration corresponding to the hot startup is also short. Correspondingly, the length of the next measurement window is also short.

It may be understood that the terminal device (namely, the first communication apparatus) needs to calculate a timing advance (timing advance, TA) based on geographical location information (which is the GNSS information herein) of the terminal device and geographical location information of a network device (namely, the second communication apparatus) to perform uplink synchronization. In this case, if the GNSS information expires, it indicates that the GNSS information is inaccurate, and an uplink synchronization requirement may not be met. Therefore, the second communication apparatus in this embodiment of this application configures the measurement window of the GNSS signal for the first communication apparatus, so that the first communication apparatus in a connected mode can also perform GNSS signal measurement, to obtain latest GNSS information for uplink synchronization, thereby meeting the uplink synchronization requirement.

S102: The second communication apparatus sends a PDCCH to the first communication apparatus, where the PDCCH is used to determine the random access occasion, and an offset of a start location of the random access occasion relative to the start location of the measurement window is within a preset range. The PDCCH is further used to trigger non-contention-based random access.

S103: If the first communication apparatus receives the PDCCH before the measurement window arrives, the first communication apparatus determines the random access occasion based on the PDCCH.

S104: The first communication apparatus sends a preamble on the random access occasion.

Optionally, after the second communication apparatus sends the first message to the first communication apparatus (that is, after step S101), the second communication apparatus may determine whether to send the physical downlink control channel (physical downlink control channel, PDCCH) used to trigger non-contention-based random access, based on the valid duration of the GNSS information reported by the first communication apparatus, a TA error of an uplink signal, or a quantity of times of updating a timing advance command (timing advance command, TAC), to correct the TA, thereby implementing uplink synchronization.

In a possible implementation, if the second communication apparatus determines to send the PDCCH used to trigger non-contention-based random access, the second communication apparatus may send the PDCCH before a next measurement window (denoted as a measurement window j for ease of description) arrives, where the PDCCH includes the random access occasion. An offset of the start location of the random access occasion relative to a start location of the measurement window j is within a preset range. The start location of the random access occasion may be after an end location of the PDCCH, and an offset between the start location of the random access occasion and the end location of the PDCCH is within a specific range. For example, the specific range is x slots. It may be understood that the measurement window configured by using the first message includes the measurement window j. For example, if the measurement window configured by using the first message is aperiodic, the measurement window j herein may be the measurement window configured by using the first message. If the measurement window configured by using the first message is periodic, the measurement window j herein may be the first measurement window after the second communication apparatus completes sending of the PDCCH used to trigger non-contention-based random access.

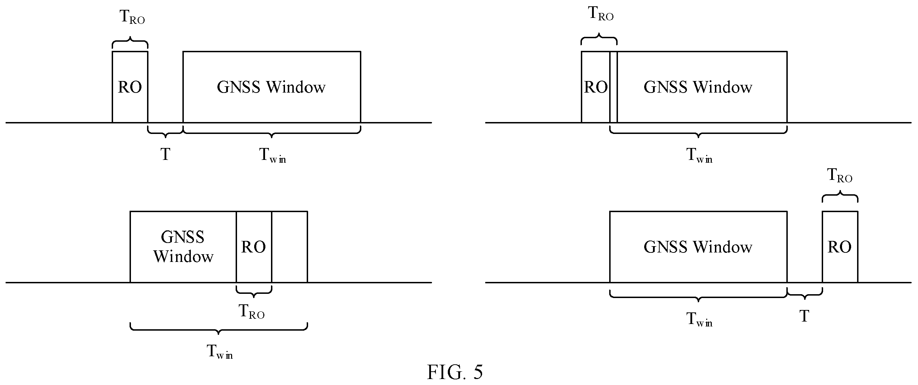

Optionally, the preset range may be an interval [-(T_{RO}+T), +(T_{win}+T)]. T_{RO} represents a length of the random access occasion, T represents a preset threshold, and T_{win} represents a length of the measurement window. In the preset range, "-" represents negative, and "+" represents positive. FIG. 5 is a diagram of a location relationship between a random access occasion and a measurement window according to an embodiment of this application. In FIG. 5, "RO" represents the random access occasion, and "GNSS window" represents the measurement window of the GNSS signal. As shown in FIG. 5, the random access occasion (RO) may overlap the measurement window (GNSS window). For example, the random access occasion is in the measurement window of the GNSS signal, or the random access occasion partially overlaps the measurement window of the GNSS signal. Alternatively, the random access occasion (RO) may not overlap the measurement window (GNSS window), for example, the random access occasion is before or after the measurement window of the GNSS signal for a period of time (a length of the period of time is equal to T). It may be understood that the location relationship between the measurement window and the random access occasion shown in FIG. 5 is merely an example, provided that the offset of the start location of the random access occasion relative to the start location of the measurement window j is within the preset range during actual application.

Usually, the first communication apparatus does not monitor the PDCCH in the measurement window configured by using the first message. Certainly, the second communication apparatus does not send the PDCCH in the measurement window either, because the first communication apparatus cannot receive a communication signal while performing GNSS signal measurement. However, the first communication apparatus needs to monitor the PDCCH at time other than the measurement window. Therefore, the second communication apparatus may send, at the time other than the measurement window, the PDCCH used to trigger non-contention-based random access.

Correspondingly, if the first communication apparatus receives, before the measurement window j arrives, the PDCCH used to trigger non-contention-based random access, the first communication apparatus may determine the random access occasion based on the received PDCCH, and may initiate non-contention-based random access on the random access occasion. For example, the first communication apparatus sends the preamble (preamble) on the random access occasion. Optionally, after the first communication apparatus receives the PDCCH, if the random access occasion indicated by the PDCCH overlaps the measurement window j, because the capability of the first communication apparatus is limited, for example, the first communication apparatus is an IoT terminal, and the first communication apparatus cannot support both communication and GNSS signal measurement, the first communication apparatus does not start a GNSS module in the measurement window j to perform GNSS positioning, that is, does not perform GNSS signal measurement. In other words, the measurement window j is no longer used by the first communication apparatus to perform GNSS signal measurement, but is used by the first communication apparatus to monitor scheduling of subsequent data, for example, monitor the PDCCH used for data scheduling. In this case, on a network side, when the second communication apparatus receives the preamble, the second communication apparatus may release a resource of the measurement window j, and may continue to perform scheduling of subsequent data by using the released resource. In this way, power consumption of the first communication apparatus can be reduced, and a service cannot be interrupted.

Optionally, the first communication apparatus receives, before the measurement window j arrives, the PDCCH used to trigger non-contention-based random access. If the random access occasion indicated by the PDCCH does not overlap the measurement window j, the first communication apparatus may initiate non-contention-based random access on the random access occasion, and may perform GNSS signal measurement in the measurement window j. Certainly, to reduce power consumption of the first communication apparatus, after receiving the PDCCH, the first communication apparatus may not perform GNSS signal measurement in the measurement window j, that is, does not start the GNSS module. Certainly, if non-contention-based random access of the first communication apparatus fails, the first communication apparatus may still perform GNSS signal measurement.

Optionally, before the measurement window j arrives, the first communication apparatus receives the PDCCH used to trigger non-contention-based random access, and may determine whether to initiate non-contention-based random access on the random access occasion or perform GNSS signal measurement in the measurement window j. Then, corresponding operations are performed. Details are not described herein.

It may be understood that, in some scenarios, for example, a scenario in which link quality is poor, although the second communication apparatus sends, before the measurement window j arrives, the PDCCH used to trigger non-contention-based random access, if the first communication apparatus receives no PDCCH before the measurement window j arrives, because the capability of the first communication apparatus is limited, the first communication apparatus does not perform PDCCH monitoring in the measurement window j. Instead, when the measurement window j arrives, the first communication apparatus performs GNSS signal measurement in the measurement window j, to obtain the latest GNSS information, thereby implementing uplink synchronization. For example, the first communication apparatus receives the GNSS signal in the measurement window j, updates the geographical location information of the first communication apparatus (that is, updates the GNSS information), and sends a fifth message to the second communication apparatus after GNSS repositioning is completed, to notify that the GNSS repositioning is completed. In other words, GNSS signal measurement is completed.

In another possible implementation, if the second communication apparatus determines not to send the PDCCH used to trigger non-contention-based random access, and certainly, the first communication apparatus receives no the PDCCH, the first communication apparatus performs GNSS signal measurement in the measurement window configured by using the first message.

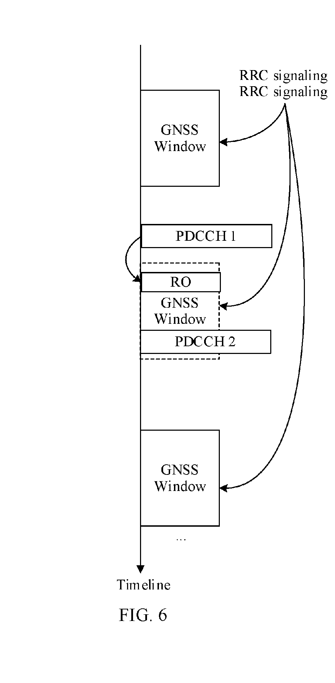

For example, FIG. 6 is a diagram of a time sequence of the communication method according to an embodiment of this application. As shown in FIG. 6, the second communication apparatus configures the measurement window of the GNSS signal (represented by a GNSS window in FIG. 6) for the first communication apparatus by using RRC signaling. As shown in FIG. 6, the first communication apparatus performs GNSS signal measurement in a first measurement window from left to right, and does not monitor a PDCCH in the first measurement window. After the first communication apparatus receives, before a second measurement window from left to right, a PDCCH (represented by a PDCCH 1 in FIG. 6) used to trigger non-contention-based random access, the first communication apparatus initiates non-contention-based random access on the random access occasion (RO) indicated by the PDCCH, for example, sends the preamble; and does not perform GNSS signal measurement in the second measurement window. In other words, the second measurement window is no longer used to perform GNSS signal measurement, which may also be understood as that a resource corresponding to the second measurement window is released. In other words, the first communication apparatus may monitor scheduling of subsequent data on the resource corresponding to the second measurement window. For example, after sending the preamble, the first communication apparatus monitors a PDCCH used for data scheduling, for example, a PDCCH 2 in FIG. 6. The first communication apparatus performs GNSS signal measurement in a third measurement window from left to right, and does not monitor a PDCCH in the third measurement window.

It may be understood that the measurement window shown in FIG. 6 may be periodic or aperiodic. If the measurement window is aperiodic, the three measurement windows shown in FIG. 6 may be configured by using three pieces of RRC signaling. It may be further understood that FIG. 6 shows merely some measurement windows, and during actual application, a quantity of measurement windows may be greater than or less than that shown in FIG. 6.

S105: The second communication apparatus performs preamble detection on the random access occasion.

S106: If the second communication apparatus detects the preamble on the random access occasion, the second communication apparatus sends a random access response message to the first communication apparatus, where the random access response message includes indication information indicating whether a value of the TA is a positive value or a negative value.

S107: If the second communication apparatus detects no preamble on the random access occasion and receives no fifth message from the first communication apparatus, the second communication apparatus resends, after the measurement window ends, the PDCCH used to trigger non-contention-based random access.

Optionally, after step S102, the second communication apparatus may perform preamble detection on the random access occasion (RO). If the second communication apparatus detects a preamble on the random access occasion (RO), it indicates that the first communication apparatus corrects, through non-contention-based random access, a TA error caused by expiration of the GNSS information. In this case, it may be considered that the measurement window j is released as a communication resource, and scheduling of subsequent data may continue.

In a possible implementation, after detecting the preamble on the random access occasion, the second communication apparatus may send the random access response message to the first communication apparatus. GNSS information obtained last time may have expired, and the TA error increases and may be a negative value. Therefore, a TAC used to correct the TA in the random access response needs to support both positive and negative values. Therefore, the random access response message may include the indication information indicating whether the value of the TA is the positive value or the negative value.

In another possible implementation, after the second communication apparatus detects the preamble on the random access occasion, if the second communication apparatus finds that the TA error detected by using the preamble is large and exceeds a closed-loop correction range, or if the second communication apparatus considers that it is difficult to compensate for the TA error of the first communication apparatus through non-contention-based random access, the second communication apparatus may send a third message to the first communication apparatus, where the third message may indicate the first communication apparatus to perform GNSS signal measurement. It may be understood that, when the first communication apparatus receives the third message, it may be considered that the non-contention-based random access fails.

In some scenarios, after receiving the third message, the first communication apparatus may perform GNSS signal measurement in the measurement window j or remaining time of the measurement window j. It may be understood that, if the second communication apparatus wants to configure the random access occasion in the measurement window j, the second communication apparatus may configure a length of the measurement window j to be longer when configuring the measurement window j, and may also configure a location of the random access occasion to be ahead. In this way, even if the second communication apparatus sends, after receiving the preamble, a feedback to the first communication apparatus to perform GNSS signal measurement, the first communication apparatus can still have sufficient time to perform GNSS signal measurement.

In some other scenarios, after receiving the third message, the first communication apparatus may re-determine the start location and/or the end location of the measurement window j, and perform GNSS signal measurement in the re-determined measurement window. For example, when the random access occasion (RO) overlaps the measurement window j, because time for performing GNSS signal measurement after the first communication apparatus receives the third message is insufficient, the start location of the measurement window j may be postponed to an end location of the random access occasion (the length of the measurement window j remains unchanged), or the measurement window j may be postponed to start after a time period after the random access occasion ends (the length of the measurement window j remains unchanged), or the end location of the measurement window j is postponed to a location after a period of time (the length of the measurement window j increases). The period of time herein may be specified in a standard protocol, may be obtained through negotiation between the first communication apparatus and the second communication apparatus, or may be configured by the second communication apparatus in the third message. This is not limited in this embodiment of this application.

It may be understood that, even if the second communication apparatus configures a longer length of the measurement window j, or the first communication apparatus re-determines the location of the measurement window j, the first communication apparatus may fail to complete GNSS signal measurement. In this case, if the first communication apparatus fails to complete GNSS signal measurement, uplink out-of-synchronization may be caused, and radio link setup fails. However, if the first communication apparatus completes the GNSS signal measurement, the first communication apparatus may feed back the fifth message to the second communication apparatus, to indicate that the first communication apparatus completes GNSS signal measurement.

In this embodiment of this application, when the TA error is excessively large, the first communication apparatus is allowed to continue to update the GNSS information by performing GNSS signal measurement, to meet a synchronization requirement.

Certainly, if the second communication apparatus finds that the TA error detected by using the preamble does not exceed the closed-loop correction range, or the second communication apparatus considers that the TA error of the first communication apparatus can be compensated for through non-contention-based random access, the second communication apparatus may send the random access response message to the first communication apparatus. The random access response message includes the indication information indicating whether the value of the TA is the positive value or the negative value.

Optionally, if the second communication apparatus detects no preamble on the random access occasion (RO), but the second communication apparatus receives the fifth message from the first communication apparatus on a feedback resource corresponding to the measurement window j, where the fifth message is used to notify that GNSS signal measurement is completed, and it indicates that the first communication apparatus updates the GNSS information through GNSS repositioning, to calculate the TA for uplink synchronization. The feedback resource corresponding to the measurement window is used to carry the fifth message. For example, the feedback resource corresponding to the measurement window is predefined or specified in a standard protocol. For example, the feedback resource is at the end of the measurement window. For another example, the feedback resource corresponding to the measurement window is configured by the second communication apparatus by using signaling. For example, after sending the first message to the first communication apparatus, the second communication apparatus sends one piece of signaling to configure the feedback resource corresponding to (each) measurement window. Alternatively, the second communication apparatus also configures the corresponding feedback resource when configuring the measurement window. In other words, the measurement window and the feedback resource of the measurement window are configured in one piece of signaling.

Optionally, if the second communication apparatus detects no preamble on the random access occasion (RO), and receives no fifth message from the first communication apparatus on a feedback resource corresponding to the measurement window j, the second communication apparatus may resend, a PDCCH used to trigger non-contention-based random access after the measurement window i ends, where the PDCCH may indicate a new random access occasion, so that the first communication apparatus initiates new non-contention-based random access on the new random access occasion. In this way, a possibility of uplink out-of- synchronization is reduced.

In this embodiment of this application, the second communication apparatus configures the measurement window of the GNSS signal for the first communication apparatus by using the first message, and then configures the random access occasion (RO) by using the PDCCH. The PDCCH is before the measurement window arrives. In this case, the first communication apparatus initiates non-contention-based random access on the RO, and does not perform GNSS signal measurement in the measurement window. In this way, GNSS signal measurement may be replaced with non-contention-based random access, so that the first communication apparatus and the second communication apparatus can be synchronized for a long time, power consumption caused by GNSS signal measurement can be reduced, a quantity of GNSS signal measurements can be reduced, and complexity can be reduced.

In the communication method shown in FIG. 4, the PDCCH is used to configure the random access occasion (RO) and trigger non-contention-based random access. In this application, the RRC signaling may alternatively be used to configure the random access occasion and/or used to trigger non-contention-based random access, and the PDCCH does not need to be used for configuration and triggering.

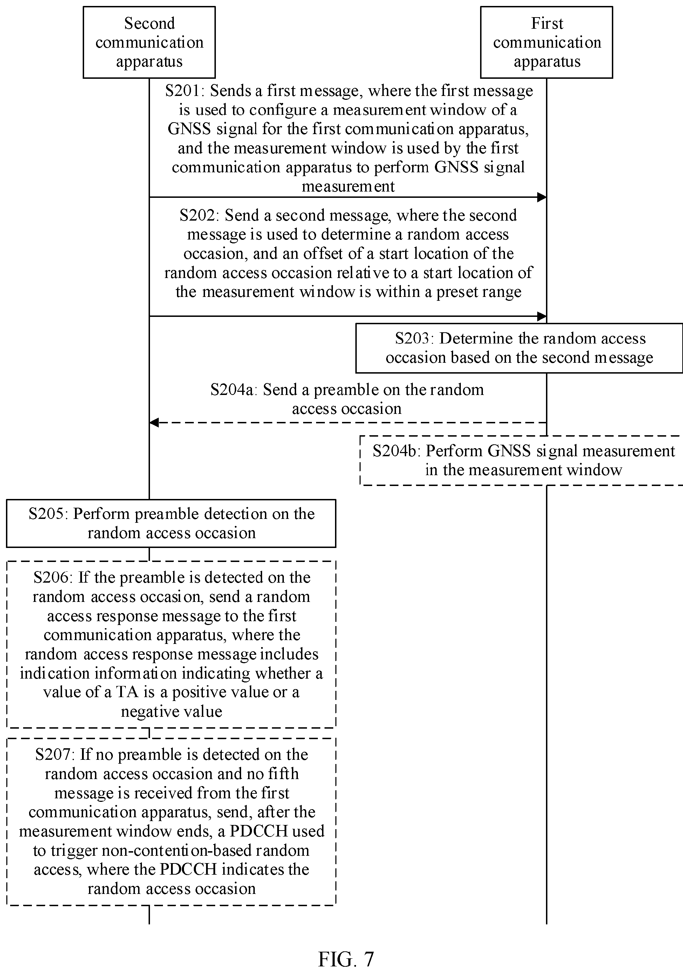

FIG. 7 is another schematic flowchart of a communication method according to an embodiment of this application. In the method, a capability of a first communication apparatus is limited. As shown in FIG. 7, the communication method includes the following steps.

S201: A second communication apparatus sends a first message to the first communication apparatus, where the first message is used to configure a measurement window of a GNSS signal for the first communication apparatus, and the measurement window is used by the first communication apparatus to perform GNSS signal measurement.

Correspondingly, the first communication apparatus receives the first message.

S202: The second communication apparatus sends a second message to the first communication apparatus, where the second message is used to determine a random access occasion, and an offset of a start location of the random access occasion relative to a start location of the measurement window is within a preset range. The second message is RRC signaling or medium access control (medium access control, MAC) control element (control element, CE) signaling.

Correspondingly, the first communication apparatus receives the second message.

S203: The first communication apparatus determines the random access occasion based on the second message.

In a possible implementation, the first message may be RRC signaling, and the second message may also be RRC signaling. The first message and the second message may be different RRC signaling, or the first message and the second message may be same RRC signaling. If the first message and the second message are the same RRC signaling, step S201 and step S202 may be replaced with the following step: The second communication apparatus sends RRC signaling to the first communication apparatus, where the RRC signaling is used to configure a measurement window of a GNSS signal and a random access occasion for the first communication apparatus, an offset of a start location of the random access occasion relative to a start location of the measurement window is within a preset range, and, the measurement window is used by the first communication apparatus to perform GNSS signal measurement. Correspondingly, step S203 may be replaced with: The first communication apparatus determines the random access occasion and the measurement window based on the RRC signaling. The preset range may be an interval [-(T_{RO}+T), +(T_{win}+T)]. T_{RO} represents a length of the random access occasion, T represents a preset threshold, and T_{win} represents a length of the measurement window. In the preset range, "-" represents negative, and "+" represents positive. A location relationship between the random access occasion and the measurement window is shown in FIG. 5. Details are not described herein again.

For example, the start location of the random access occasion may be after the end location of the RRC signaling, and the offset between the start location of the random access occasion and the end location of the RRC signaling is within a first range. For example, the first range is x slots (slot). Alternatively, the start location of the measurement window may be after the end location of the RRC signaling, and the offset between the start location of the measurement window and the end location of the RRC signaling is within a second range. For example, the second range is y slots. In addition, the random access occasion and the measurement window that are configured by using the RRC signaling meet that the offset of the start location of the random access occasion relative to the start location of the measurement window is within the preset range.

Optionally, the random access occasion in this embodiment of this application corresponds to (or is bound to) the measurement window, and one measurement window may correspond to one or more random access occasions. The second communication apparatus may configure one or more measurement windows for the first communication apparatus. This is not limited in this embodiment of this application. It may be understood that, if the measurement window is periodic, the random access occasion corresponding to (or bound to) the measurement window may also be periodic. It may be further understood that, if the measurement window is not periodic, the second communication apparatus may configure, when necessary, the measurement window and the random access occasion corresponding to (or bound to) the measurement window, and may configure only the measurement window when not necessary. Specifically, for an implementation in which the second communication apparatus configures the measurement window of the GNSS signal for the first communication apparatus by using the RRC signaling, refer to the description of step S101 in the embodiment shown in FIG. 4. Details are not described herein again. For ease of description, the following uses one measurement window as an example for description.

Optionally, when configuring the measurement window of the GNSS signal, the second communication apparatus may also configure the start location of the corresponding random access occasion in an offset value (offset) manner. In this case, the RRC signaling includes the measurement window and a location offset of the random access occasion corresponding to the measurement window relative to the measurement window. For example, the location offset of the random access occasion relative to the measurement window may be the offset (offset) of the start location of the random access occasion relative to the start location of the measurement window. The offset may be a positive value or a negative value. It may be understood that, if the one measurement window corresponds to (or is bound to) a plurality of random access occasions, the RRC signaling may include location offsets of the plurality of random access occasions relative to the measurement window. In other words, the RRC signaling may have a plurality of offset values.

In this embodiment of this application, the measurement window of the GNSS signal is bound to the random access occasion, and no additional PDCCH is required to configure the random access occasion and trigger non-contention-based random access. This can reduce PDCCH overheads and reduce PDCCH detection before the random access occasion.

It may be understood that, if the first message and the second message are different RRC signaling, and the second message includes the random access occasion, the measurement window configured in the first message still corresponds to (or is bound to) the random access occasion included in the second message. In addition, the offset of the start location of the random access occasion relative to the start location of the measurement window still is within the preset range. Optionally, the measurement window may be determined by using at least two of the following: the start location of the measurement window, an end location of the measurement window, and a length of the measurement window. Similarly, the random access occasion may also be determined by using at least two of the following: a start location of the random access occasion, an end location of the random access occasion, and a length of the random access occasion.

Optionally, after the second communication apparatus configures the random access occasion (RO) for the first communication apparatus by using the RRC signaling, when the second communication apparatus wants to schedule the first communication apparatus to perform non-contention-based random access, the second communication apparatus may send a medium access control (medium access control, MAC) control element (control element, CE) signaling to the first communication apparatus. The MAC CE signaling is used to activate the random access occasion (RO) configured by using the RRC signaling. It may be understood that, if there are a plurality of random access occasions (RO) configured by using the RRC signaling, the MAC CE signaling may activate one of the ROs, for example, activate a first RO after an end location of the MAC CE signaling; or may activate all ROs bound to (or corresponding to) the first measurement window after the end location of the MAC CE signaling; or may activate all ROs configured by using the RRC signaling. This is not limited in this embodiment of this application. Correspondingly, the first communication apparatus may initiate non-contention-based random access on the random access occasion (RO) activated by using the MAC CE signaling.

In another possible implementation, the first message may be RRC signaling or MAC CE signaling, and the second message may be MAC CE signaling. It may be understood that when the first message is the MAC CE signaling, the first message and the second message may be same MAC CE signaling, or may be different MAC CE signaling. This is not limited in this embodiment of this application. For an implementation in which the second communication apparatus configures the measurement window of the GNSS signal for the first communication apparatus by using the first message, refer to the description of step S 101 in the embodiment shown in FIG. 4. Details are not described herein again. The second communication apparatus may send the MAC CE signaling (herein, the second message) to the first communication apparatus, where the MAC CE signaling may be used to configure the random access occasion. The random access occasion configured by using the MAC CE signaling and the measurement window configured by using the RRC signaling still meet that the offset of the start location of the random access occasion relative to the start location of the measurement window is within the preset range. It may be understood that, in an existing standard, the terminal device sends a feedback after receiving the MAC CE signaling, and the MAC CE signaling takes effect in a k^{th} slot after the feedback. Therefore, the start location of the random access occasion may be an effective location of the MAC CE signaling.

In a possible implementation, the communication method shown in FIG. 7 may further include step S204a or step S204b.

S204a: The first communication apparatus sends a preamble on the random access occasion.

S204b: The first communication apparatus performs GNSS signal measurement in the measurement window.

Optionally, after determining the random access occasion, the first communication apparatus may initiate non-contention-based random access on the random access occasion, for example, send the preamble on the random access occasion, and skip starting a GNSS module in the measurement window corresponding to (or bound to) the random access occasion to perform GNSS positioning. In other words, the GNSS signal is not measured. In other words, when the second communication apparatus (namely, a network side) configures the random access occasion (RO) by using the RRC signaling, for example, configures an offset of the start location of the random access occasion relative to the start location of the measurement window in the RRC signaling, it indicates that the first communication apparatus (namely, a terminal side) needs to perform non-contention-based random access. In this case, after receiving the RRC signaling, the first communication apparatus may send the preamble on the random access occasion configured by using the RRC signaling, to initiate non-contention-based random access. It may be understood that if one measurement window corresponds to (or is bound to) a plurality of random access occasions, the first communication apparatus may choose one of the random access occasions to send the preamble. It may be further understood that, if no random access occasion (RO) is configured on the network side, the terminal side does not need to perform non-contention-based random access. In this case, the first communication apparatus can measure only the GNSS signal. It should be noted that this embodiment of this application focuses on a case in which the random access occasion (RO) is configured on the network side.

Optionally, after determining the random access occasion, the first communication apparatus may determine whether to initiate non-contention-based random access on the random access occasion or perform GNSS signal measurement in the corresponding measurement window, and then perform a corresponding operation. Details are not described herein. In other words, when the random access occasion (RO) is configured for the second communication apparatus (namely, the network side), the first communication apparatus (namely, the terminal side) may choose to initiate non-contention-based random access or perform GNSS signal measurement. If the first communication apparatus chooses to perform GNSS signal measurements in the measurement window, after completing measurement, the first communication apparatus may send a fifth message to the second communication apparatus, to notify that GNSS signal measurement is completed.

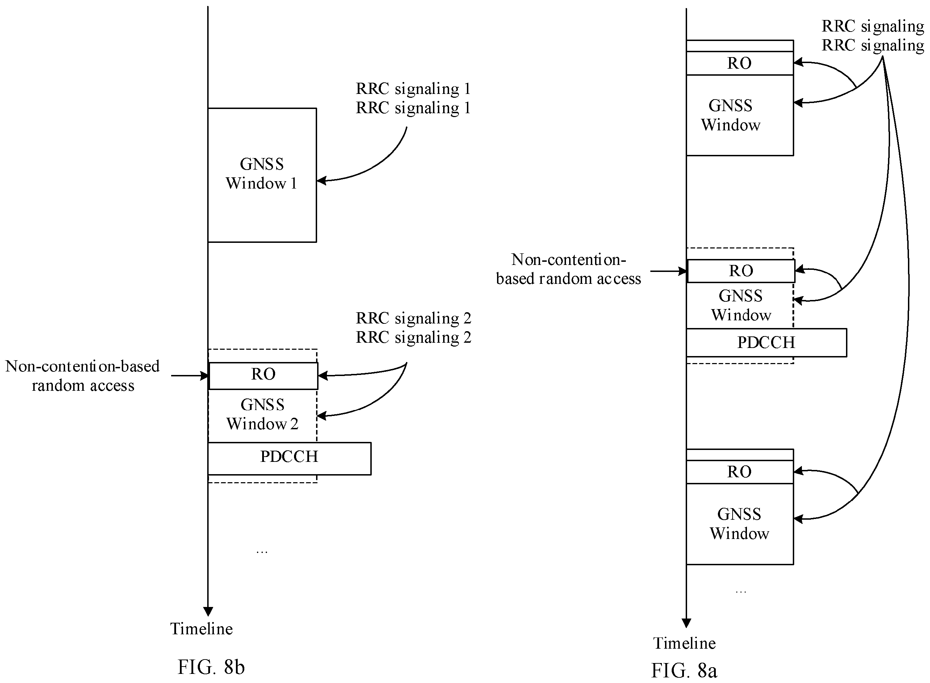

For example, FIG. 8a is a diagram of another time sequence of a communication method according to an embodiment of this application. For example, the random access occasion is in the measurement window, and one measurement window is bound to (corresponding to) one random access occasion. As shown in FIG. 8a, the second communication apparatus configures the measurement window of the GNSS signal (represented by a GNSS window in FIG. 8a) and the random access occasion (represented by an RO in FIG. 8a) for the first communication apparatus by using the RRC signaling. The first communication apparatus chooses to perform GNSS signal measurement in the first measurement window from left to right, and does not monitor the PDCCH in the first measurement window. In this case, it may be understood that a resource corresponding to the random access occasion bound to (or corresponding to) the first measurement window has been released. The first communication apparatus chooses to initiate non-contention-based random access on the random access occasion (RO) bound to (or corresponding to) the second measurement window from left to right, and does not perform GNSS signal measurement in the second measurement window. In other words, the second measurement window is no longer used to perform GNSS signal measurement, but is used by the first communication apparatus to monitor scheduling of subsequent data, for example, a PDCCH after a random access occasion (RO) in FIG. 8a. It may also be understood that a resource corresponding to the second measurement window is released. In other words, the first communication apparatus may monitor the PDCCH on the resource corresponding to the second measurement window. The first communication apparatus chooses to perform GNSS signal measurement in a third measurement window from left to right, and does not monitor the PDCCH in the third measurement window.

It should be understood that the measurement window and the random access occasion shown in FIG. 8a may be periodic, or may be aperiodic. If the measurement window and the random access occasion are aperiodic, the three measurement windows and the three random access occasions shown in FIG. 8a may be configured by using three pieces of RRC signaling. It may be further understood that FIG. 8a shows merely some measurement windows and some random access occasions. In actual application, a quantity of measurement windows and a quantity of random access occasions may be greater than or less than those shown in FIG. 8a.

For another example, FIG. 8b is a diagram of still another time sequence of a communication method according to an embodiment of this application. An example in which the random access occasion is in the measurement window is used. As shown in FIG. 8b, the second communication apparatus configures a measurement window 1 of a GNSS signal (represented by a GNSS window 1 in FIG. 8b) for the first communication apparatus by using RRC signaling 1, and configures a measurement window 2 of a GNSS signal (a GNSS window 2 in FIG. 8b) and a random access occasion (represented by an RO in FIG. 8b) for the first communication apparatus by using RRC signaling 2. The first communication apparatus performs GNSS signal measurement in the measurement window 1, and does not monitor a PDCCH in the measurement window 1. The first communication apparatus initiates non-contention-based random access on a random access occasion bound to (or corresponding to) the measurement window 2, and does not perform GNSS signal measurement in the measurement window 2.

It may be understood that step S204a and step S204b may not coexist. In other words, either step S204a or step S204b may be performed. In other words, if step S204a is performed, step S204b is not performed. If step S204b is performed, step S204a is not performed. In some scenarios, if the measurement window does not overlap a random access occasion bound to (or corresponding to) the measurement window, step S204a and step S204b may coexist. For example, the random access occasion is before the start location of the measurement window. If non-contention-based random access initiated by the first communication apparatus on the random access occasion fails, to reduce a possibility of uplink out-of-synchronization, the first communication apparatus may still perform GNSS signal measurement in the measurement window. Certainly, if non-contention-based random access initiated by the first communication apparatus on the random access occasion succeeds, the first communication apparatus does not need to perform GNSS signal measurement in the measurement window.

S205: The second communication apparatus performs preamble detection on the random access occasion.

In a possible implementation, the communication method shown in FIG. 7 may further include step S206 and step S207.

S206: If the second communication apparatus detects the preamble on the random access occasion, the second communication apparatus sends a random access response message to the first communication apparatus, where the random access response message includes indication information indicating whether a value of a TA is a positive value or a negative value.

S207: If the second communication apparatus detects no preamble on the random access occasion and receives no fifth message from the first communication apparatus, the second communication apparatus sends, after the measurement window ends, a PDCCH used to trigger non-contention-based random access, where the PDCCH indicates the random access occasion. It may be understood that the random access occasion indicated by the PDCCH is different from the random access occasion determined based on the second message.

Optionally, for implementations of step S205 to step S207 in this embodiment of this application, refer to the implementations of step S105 to step S107 in the embodiment shown in FIG. 4. Details are not described herein again.

In this embodiment of this application, the second communication apparatus configures the measurement window of the GNSS signal and the random access occasion (RO) for the first communication apparatus by using the first message, and the random access occasion is bound to (or corresponds to) the measurement window. After receiving the RRC signaling, the first communication apparatus initiates non-contention-based random access in the RO, and does not perform GNSS signal measurement in the measurement window. In this way, GNSS signal measurement may be replaced with non-contention-based random access, so that the first communication apparatus and the second communication apparatus are synchronized for a long time, power consumption caused by GNSS signal measurement is reduced, a quantity of times of GNSS signal measurement is reduced, and complexity is reduced. In addition, PDCCH overheads can be reduced.

In an optional embodiment, when a capability of the first communication apparatus is not limited, power consumption and complexity of performing GNSS signal measurement by the first communication apparatus are high. This application further provides a communication method, so that the first communication apparatus and the second communication apparatus can be synchronized for a long time, power consumption of the first communication apparatus can be reduced, and complexity can be reduced. Specifically, the first communication apparatus reports the valid duration of the GNSS information to the second communication apparatus. If the second communication apparatus finds, based on the valid duration of the GNSS information, that the GNSS information has become invalid, and a TA error of the first communication apparatus can be compensated for through non-contention-based random access, the second communication apparatus may send, to the first communication apparatus, the PDCCH used to trigger non-contention-based random access, where the PDCCH indicates a random access occasion. The first communication apparatus initiates non-contention-based random access on the random access occasion. It may be understood that power consumption of performing non-contention-based random access by the first communication apparatus is lower than power consumption of performing GNSS signal measurement.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof.

The foregoing content describes in detail the method provided in this application. To facilitate implementation of the foregoing solutions in embodiments of this application, embodiments of this application further provide a corresponding apparatus or device.

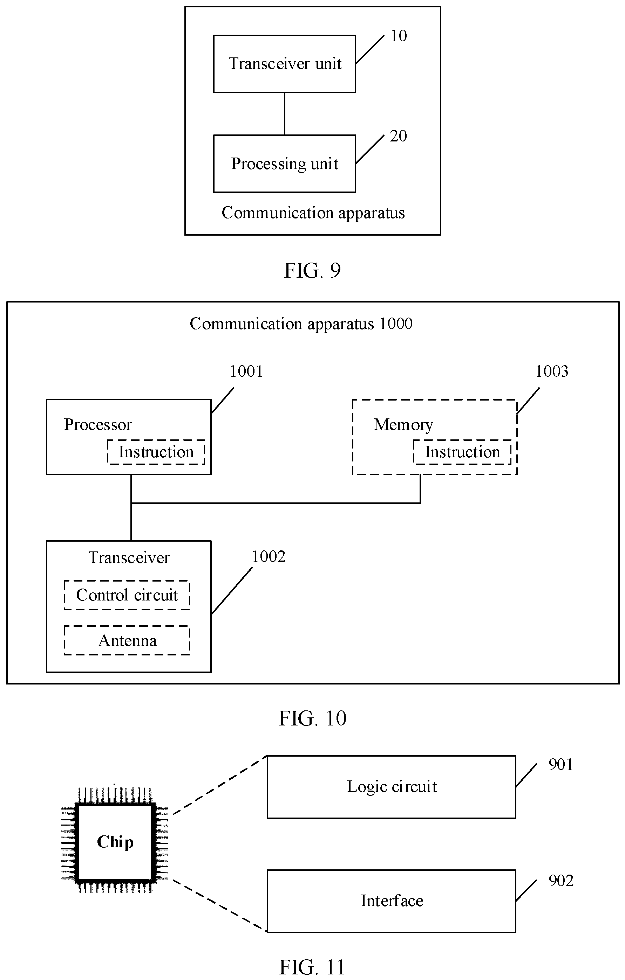

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail the communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a transceiver unit 10 and a processing unit 20.

In some embodiments of this application, the communication apparatus may be the first communication apparatus shown above. For example, the first communication apparatus may include a terminal device, a chip, or the like. In other words, the communication apparatus shown in FIG. 9 may be configured to perform steps, functions, or the like performed by the first communication apparatus in the foregoing method embodiments.

The transceiver unit 10 is configured to receive a first message and a second message from a second communication apparatus. The processing unit 20 is configured to determine a random access occasion based on the second message. For specific descriptions of the first message and the second message, refer to the foregoing method embodiments (including FIG. 4 and FIG. 7). Details are not described herein again.

Optionally, the transceiver unit 10 is further configured to send a preamble on the random access occasion.

Optionally, the transceiver unit 10 is further configured to receive a random access response message from the second communication apparatus, where the random access response message includes indication information, and the indication information indicates whether a value of a TA is a positive value or a negative value.

Optionally, the transceiver unit 10 is further configured to receive a third message from the second communication apparatus, where the third message is used to notify the first communication apparatus to measure a GNSS signal. The processing unit 20 is further configured to perform GNSS signal measurement in the measurement window.

Optionally, the transceiver unit 10 is further configured to receive a third message from the second communication apparatus, where the third message is used to notify the first communication apparatus to measure a GNSS signal. The processing unit 20 is further configured to: re-determine a start location and/or an end location of the measurement window, and perform GNSS signal measurement in the re-determined measurement window.

Optionally, the transceiver unit 10 is further configured to send a fourth message to the second communication apparatus, where the fourth message indicates measurement duration required by the first communication apparatus to perform GNSS signal measurement and valid duration of GNSS information; and the measurement duration is used to determine a length of the measurement window, and the valid duration of the GNSS information is used to determine the start location of the measurement window.

In this embodiment of this application, for specific descriptions of the third message, the fourth message, the random access response message, and the like, refer to the foregoing method embodiments (including FIG. 4 and FIG. 7). Details are not described herein again.

It may be understood that specific descriptions of the transceiver unit and the processing unit shown in embodiments of this application are merely examples. For specific functions, steps, or the like of the transceiver unit and the processing unit, refer to the foregoing method embodiments. Details are not described herein again.

Still refer to FIG. 9. In some other embodiments of this application, the communication apparatus may be the second communication apparatus shown above or a chip in the second communication apparatus. In other words, the communication apparatus shown in FIG. 9 may be configured to perform steps, functions, or the like performed by the second communication apparatus in the foregoing method embodiments.

The transceiver unit 10 is configured to send a first message and a second message to a first communication apparatus. The processing unit 20 is configured to perform preamble detection on a random access occasion. For specific descriptions of the first message and the second message, refer to the foregoing method embodiments (including FIG. 4 and FIG. 7). Details are not described herein again.

Optionally, the transceiver unit 10 is further configured to send a random access response message to the first communication apparatus when a preamble is detected on the random access occasion, where the random access response message includes indication information, and the indication information indicates whether a value of a TA is a positive value or a negative value.

Optionally, the transceiver unit 10 is further configured to send a third message to the first communication apparatus when detecting a preamble on the random access occasion, where the third message is used to notify the first communication apparatus to measure a GNSS signal.

Optionally, the transceiver unit 10 is further configured to: when no preamble is detected on the random access occasion and no fifth message from the first communication apparatus is received, re-send, after the measurement window ends, a PDCCH used to trigger non-contention-based random access, where the fifth message is used to notify that the GNSS signal measurement is completed.

Optionally, the transceiver unit 10 is further configured to receive a fourth message from the first communication apparatus, where the fourth message indicates measurement duration required by the first communication apparatus to perform GNSS signal measurement and valid duration of the GNSS information. The measurement duration is used to determine a length of the measurement window, and the valid duration of the GNSS information is used to determine a start location of the measurement window.

In this embodiment of this application, for specific descriptions of the third message, the fourth message, the fifth message, the random access response message, and the like, refer to the foregoing method embodiments (including FIG. 4 and FIG. 7). Details are not described herein again.

It may be understood that specific descriptions of the transceiver unit and the processing unit shown in embodiments of this application are merely examples. For specific functions, steps, or the like of the transceiver unit and the processing unit, refer to the foregoing method embodiments. Details are not described herein again.

The foregoing describes the communication apparatuses in embodiments of this application. The following describes a possible product form of the communication apparatus. It should be understood that a product in any form that has a function of the communication apparatus in FIG. 9 falls within the protection scope of embodiments of this application. It should be further understood that the following descriptions are merely examples, and do not limit a product form of the communication apparatus in embodiments of this application.

In a possible implementation, in the communication apparatus shown in FIG. 9, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information in the foregoing method may be understood as a process of receiving the input information by the processor. When the processor receives the input information, the transceiver receives the foregoing information, and inputs the information to the processor. Further, after the transceiver receives the foregoing information, other processing may further need to be performed on the information before processed information is input into the processor.

FIG. 10 is a diagram of a structure of a communication apparatus 1000 according to an embodiment of this application. The communication apparatus 1000 may be a first communication apparatus, a second communication apparatus, or a chip in the first communication apparatus or the second communication apparatus. FIG. 10 shows merely main components in the communication apparatus 1000. In addition to the processor 1001 and the transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The transceiver 1002 may include a receiver and a transmitter. The receiver is configured to perform a receiving function (or operation), and the transmitter is configured to perform a transmitting function (or operation). The transceiver is configured to communicate with another device/apparatus via a transmission medium.

The processor 1001, the transceiver 1002, and the memory 1003 may be connected through a communication bus.

For example, when the communication apparatus is configured to perform the steps, the methods, or the functions performed by the first communication apparatus, the transceiver 1002 is configured to receive the first message and the second message. The processor 1001 is configured to determine the random access occasion based on the second message.

For example, when the communication apparatus is configured to perform the steps, the methods, or the functions performed by the second communication apparatus, the transceiver 1002 is configured to send the first message and the second message. The processor 1001 is configured to perform preamble detection on the random access occasion.

In this embodiment of this application, for descriptions of the first message, the second message, the random access occasion, the first communication apparatus, the second communication apparatus, and the like, refer to the descriptions in the foregoing method embodiments (including FIG. 4 and FIG. 7). Details are not described herein again. It may be understood that for specific descriptions of the processor and the transceiver, refer to the descriptions of the processing unit and the transceiver unit shown in FIG. 9. Details are not described herein again.

Optionally, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 1001 may store instructions. The instructions may be a computer program. The computer program is run on the processor 1001, so that the communication apparatus 1000 can perform the method described in the foregoing method embodiments. The computer program may be solidified in the processor 1001. In this case, the processor 1001 may be implemented by hardware.

In an implementation, the communication apparatus 1000 may include a circuit. The circuit may implement the transmitting, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (N-channel Metal-oxide-semiconductor, NMOS), a positive-channel metal-oxide-semiconductor (positive-channel metal-oxide-semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may further have more components than those in FIG. 10, and the like. This is not limited in this embodiment of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 9, the processing unit 20 may be one or more logic circuits, and the transceiver unit 10 may be an input/output interface, or may be referred to as a communication interface, an interface circuit, an interface, or the like. Alternatively, the transceiver unit 10 may be a transmitting unit and a receiving unit. The transmitting unit may be an output interface, and the receiving unit may be an input interface. The transmitting unit and the receiving unit are integrated into one unit, for example, an input/output interface. FIG. 11 is another diagram of another structure of a communication apparatus according to an embodiment of this application. As shown in FIG. 11, the communication apparatus shown in FIG. 11 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 11 is shown by using an example in which the communication apparatus is a chip. The chip includes the logic circuit 901 and the interface 902.

In this embodiment of this application, the logic circuit and the interface may be coupled to each other. A specific manner of connection between the logical circuit and the interface is not limited in this embodiment of this application.

For example, when the communication apparatus is configured to perform the methods, the functions, or the steps performed by the first communication apparatus, the interface 902 is configured to input the first message and the second message. The logic circuit 901 is configured to determine the random access occasion based on the second message.

For example, when the communication apparatus is configured to perform the steps, the methods, or the functions performed by the second communication apparatus, the interface 902 is configured to output the first message and the second message. The logic circuit 901 is configured to perform preamble detection on the random access occasion.

In this embodiment of this application, for descriptions of the first message, the second message, the random access occasion, the first communication apparatus, the second communication apparatus, and the like, refer to the descriptions in the foregoing method embodiments (including FIG. 4 and FIG. 7). Details are not described herein again. It may be understood that for specific descriptions of the logic circuit 901 and the interface 902, refer to the descriptions of the processing unit and the transceiver unit shown in FIG. 9. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of embodiments shown in FIG. 11, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments (FIG. 4 or FIG. 7).

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are performed.

This application further provides a computer program product. The computer program product includes computer code or a computer program. When the computer code or the computer program is run on a computer, operations and/or processing performed by the second communication apparatus in the method provided in this application are performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be chosen based on an actual requirement to implement the technical effect of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first communication apparatus, a first message from a second communication apparatus, wherein the first message is used to configure a measurement window of a global navigation satellite system GNSS signal for the first communication apparatus, and the measurement window is used by the first communication apparatus to perform GNSS signal measurement;
receiving, by the first communication apparatus, a second message from the second communication apparatus, wherein the second message is radio resource control RRC signaling or a physical downlink control channel PDCCH; and
determining, by the first communication apparatus, a random access occasion based on the second message, wherein
an offset of a start location of the random access occasion relative to a start location of the measurement window is within a preset range.

2. The method according to claim 1, wherein that an offset of a start location of the random access occasion relative to a start location of the measurement window is within a preset range comprises: the random access occasion is in the measurement window.

3. The method according to claim 1 or 2, wherein the second message comprises the random access occasion.

4. The method according to any one of claims 1 to 3, wherein the first communication apparatus does not perform GNSS signal measurement in the measurement window.

5. The method according to any one of claims 1 to 4, wherein after the determining, by the first communication apparatus, a random access occasion based on the second message, the method further comprises:
sending, by the first communication apparatus, a preamble on the random access occasion.

6. The method according to claim 5, wherein after the sending, by the first communication apparatus, a preamble preamble on the random access occasion, the method further comprises:
receiving, by the first communication apparatus, a random access response message from the second communication apparatus, wherein the random access response message comprises indication information, and the indication information indicates whether a value of a timing advance TA is a positive value or a negative value.

7. The method according to claim 5, wherein after the sending, by the first communication apparatus, a preamble preamble on the random access occasion, the method further comprises:
receiving, by the first communication apparatus, a third message from the second communication apparatus, wherein the third message indicates the first communication apparatus to perform GNSS signal measurement; and
performing, by the first communication apparatus, GNSS signal measurement in the measurement window.

8. The method according to claim 5, wherein after the sending, by the first communication apparatus, a preamble preamble on the random access occasion, the method further comprises:
receiving, by the first communication apparatus, a third message from the second communication apparatus, wherein the third message indicates the first communication apparatus to perform GNSS signal measurement; and
re-determining, by the first communication apparatus, a start location and/or an end location of the measurement window, and performing GNSS signal measurement in a re-determined measurement window.

9. The method according to any one of claims 1 to 8, wherein before the receiving, by the first communication apparatus, a first message from the second communication apparatus, the method further comprises:
sending, by the first communication apparatus, a fourth message to the second communication apparatus, wherein the fourth message indicates measurement duration required by the first communication apparatus to perform GNSS signal measurement and valid duration of GNSS information; and
the measurement duration is used to determine a length of the measurement window, and the valid duration of the GNSS information is used to determine the start location of the measurement window.

10. The method according to any one of claims 1 to 9, wherein the first message comprises one or more of the following: the start location of the measurement window, the end location of the measurement window, the length of the measurement window, or a measurement periodicity.

11. A communication method, comprising:
sending, by a second communication apparatus, a first message to a first communication apparatus, wherein the first message is used to configure a measurement window of a global navigation satellite system GNSS signal for the first communication apparatus, and the measurement window is used by the first communication apparatus to perform GNSS signal measurement;
sending, by the second communication apparatus, a second message to the first communication apparatus, wherein the second message is radio resource control RRC signaling or a physical downlink control channel PDCCH, the second message is used to determine a random access occasion, and an offset of a start location of the random access occasion relative to a start location of the measurement window is within a preset range; and
performing, by the second communication apparatus, preamble preamble detection on the random access occasion.

12. The method according to claim 11, wherein that an offset of a start location of the random access occasion relative to a start location of the measurement window is within a preset range comprises: the random access occasion is in the measurement window.

13. The method according to claim 11 or 12, wherein the second message comprises the random access occasion.

14. The method according to any one of claims 11 to 13, wherein the method further comprises:
if the second communication apparatus detects a preamble on the random access occasion, sending, by the second communication apparatus, a random access response message to the first communication apparatus, wherein the random access response message comprises indication information, and the indication information indicates whether a value of a timing advance TA is a positive value or a negative value.

15. The method according to any one of claims 11 to 13, wherein the method further comprises:
if the second communication apparatus detects a preamble on the random access occasion, sending, by the second communication apparatus, a third message to the first communication apparatus, wherein the third message indicates the first communication apparatus to perform GNSS signal measurement.

16. The method according to any one of claims 11 to 15, wherein the method further comprises:
if the second communication apparatus detects no preamble on the random access occasion and receives no fifth message from the first communication apparatus, resending, by the second communication apparatus after the measurement window ends, a PDCCH used to trigger non-contention-based random access, wherein the fifth message is used to notify that GNSS signal measurement is completed.

17. The method according to any one of claims 11 to 16, wherein before the sending, by a second communication apparatus, a first message to a first communication apparatus, the method further comprises:
receiving, by the second communication apparatus, a fourth message from the first communication apparatus, wherein the fourth message indicates measurement duration required by the first communication apparatus to perform GNSS signal measurement and valid duration of GNSS information; and
the measurement duration is used to determine a length of the measurement window, and the valid duration of the GNSS information is used to determine the start location of the measurement window.

18. The method according to any one of claims 11 to 17, wherein the first message comprises one or more of the following: the start location of the measurement window, the end location of the measurement window, the length of the measurement window, or a measurement periodicity.

19. A communication apparatus, comprising a module or unit configured to perform the method according to any one of claims 1 to 18.

20. A communication apparatus, comprising a processor and a memory, wherein
the memory is configured to store instructions; and
the processor is configured to execute the instructions, so that the method according to any one of claims 1 to 18 is performed.

21. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 18, to obtain processed data, and the interface is configured to output the processed data.

22. A communication system, comprising: a first communication apparatus configured to perform the method according to any one of claims 1 to 10, and a second communication apparatus configured to perform the method according to any one of claims 11 to 18.

23. A computer-readable storage medium, wherein the computer-readable storage medium is configured to store a computer program, and when the computer program is executed, the method according to any one of claims 1 to 18 is performed.
